# EUROPEAN PATENT APPLICATION

(11) **EP 1 990 943 A2**
(43) Date of publication of application: **12.11.2008**
(21) Application number: 08008594.7
(22) Date of filing: 07.05.2008
(51) Int. Cl.: H04L 1/18

(54) **Method and apparatus of delivering protocol data units for a user equipment in a wireless communications system**

(30) Priority: 07.05.2007 US 916546 P
(71) Applicant: Innovative Sonic Limited, Tortola (VG)
(72) Inventor: Tseng, Li Chih, Taipei City, Taiwan (TW)
(74) Representative: Hager, Thomas Johannes

(57) **Abstract**

A method of delivering packet data units (PDUs) for a user equipment in a wireless communications system includes receiving a reordering PDU from a protocol entity (302). The reordering PDU has a PDU sequence. A first PDU of the PDU sequence is a segment of a PDU having a segmented side at the front, and a last PDU of the PDU sequence is a complete PDU. The first PDU is concatenated with a previously stored PDU segment to form a complete PDU for being delivered to an upper layer entity of the protocol entity when the reordering PDU and the previously stored PDU segment are consecutive (304). All PDUs other than the first PDU in the reordering PDU are delivered to the upper layer entity (306).

## Description

This application claims the benefit of U.S. Provisional Application No. 60916546, filed on MAY 07, 2007 and entitled "Method and Apparatus for allocating HARQ configuration and concatenation and delivery of MAC PDUs".

The present invention relates to a method and apparatus for delivering protocol data units in a user equipment of a wireless communications system according to the pre-characterizing clauses of claims 1 and 8.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates.

In the prior art, lengths of all Protocol Data Units (PDUs) outputted from a Radio Link Control (RLC) layer are the same. However, this decreases bandwidth utility rate and data processing efficiency, especially for high data rate applications, such as High Speed Downlink Package Access (HSDPA) and High Speed Uplink Package Access (HSUPA) in the 3G mobile telecommunications system. Thus, targeting high data rate applications, the 3rd Generation Partnership Project (3GPP) makes some modifications for RLC and Media Access Control (MAC) layers, which primarily includes adopting flexible RLC PDU sizes and providing PDU segmentation/reassembly in the MAC layer, to enhance bandwidth utility rate and data processing efficiency, thereby making high data rate enabled by physical layer features such as Multi-input Multi-output (MIMO) and high order modulations possible.

In such a situation, the 3GPP newly introduces a MAC-ehs protocol entity in the MAC layer, which allows the support of flexible RLC PDU sizes as well as MAC segmentation/reassembly. Furthermore, unlike MAC-hs for HSDPA, MAC-ehs allows multiplexing of data from several priority queues within one transmission time interval (TTI) of 2 ms. Detailed operations of the MAC-ehs entity can be found in the MAC protocol specification formulated by the 3GPP, and are not narrated herein.

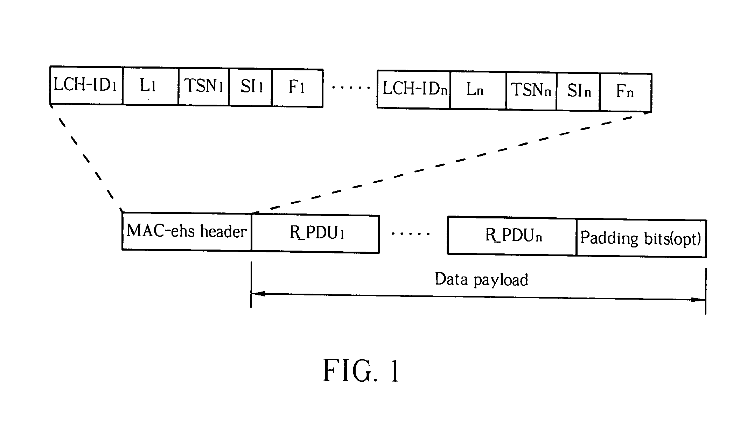

Please refer to FIG 1, which illustrates a schematic diagram of a MAC-ehs PDU. The MAC-ehs PDU consists of a plurality of reordering PDUs R_PDUₙ and a corresponding MAC-ehs header. Each reordering PDU consists of at least one consecutive MAC-ehs Serving Data Unit (SDUs) or segments of MAC-ehs SDUs belonging to the same priority queue, or reordering queue. A MAC-ehs SDU, i.e. an upper layer PDU, is either a MAC-c PDU or a MAC-d PDU. For each reordering PDU, the MAC-ehs header carries a Logical channel identifier (LCH-ID) field LCH-IDₙ, a Length field Lₙ, a Transmission Sequence Number (TSN) field TSNₙ, a Segmentation Indication (SI) field Sh, and a header extension field Fₙ. The LCH-ID field LCH-IDₙ indicates a priority queue for each reordering PDU, wherein the mapping between the logic channel and the priority/reordering queue is provided by upper layers. The Length field Lₙ indicates data length of each reordering PDU. The TSN field TSNₙ indicates a TSN of each reordering PDU for reordering purpose. The SI field SIₙ indicates whether MAC-ehs SDUs included in each reordering PDU are segmented and segmentation type of the reordering PDU for reassembly. The header extension field Fₙ then indicates whether there exists a next reordering PDU in the following.

Thus, when a MAC-ehs PDU is received by the UE, each reordering PDU is firstly assigned to a corresponding reordering queue for reordering according to the LCH-ID field LCH-IDₙ and the TSN field TSN_{n.} In each reordering queue, if the latest received reordering PDU is determined to be consecutive to a previously stored segment of a MAC-ehs SDU, the reordering PDU shall be further concatenated with the previously stored segment of the MAC-ehs SDU according to the SI field SIₙ, so that a complete MAC-ehs SDU can be delivered to upper layers.

According to the above MAC protocol, the SI field is indicated by two bits, and thus includes four segmentation types:
1) Type'00': indicates that a first MAC-ehs SDU and a last MAC-ehs SDU in a reordering PDU are not segmented.
2) Type'01': indicates that a first MAC-ehs SDU in a reordering PDU is a front-end segmented upper layer PDU; and, if there are more than one MAC-ehs SDUs in the reordering PDU, a last MAC-ehs SDU in the reordering PDU is not segmented.
3) Type' 10': indicates that a last MAC-ehs SDU in a reordering PDU is a back-end segmented upper layer PDU; and, if there are more than one MAC-ehs SDUs in the reordering PDU, a first MAC-ehs SDU in the reordering PDU is not segmented.
4) Type'11': indicates that a first MAC-ehs SDU in a reordering PDU is a front-end segmented upper layer PDU; and, a last MAC-ehs SDU in the reordering PDU is a back-end segmented upper layer PDU.

In the prior art, when a reordering PDU with the SI field='01' is received, the UE may firstly determine whether the reordering PDU is consecutive to a previously stored PDU segment according to a TSN or the SI field of the reordering PDU. If the reordering PDU is consecutive to the previously stored PDU segment, a first MAC-ehs SDU in the reordering PDU, which is a front-end segmented upper layer PDU, shall be concatenated with the previously stored PDU segment to form a complete MAC-ehs SDU and further delivered to upper layers, such as to corresponding logic channels through a demultiplexing entity.

Conversely, if the reordering PDU is not consecutive to the previously stored PDU segment, the UE then discards the first MAC-ehs SDU in the reordering PDU and the previously stored PDU segment, and delivers all complete MAC-ehs SDUs in the reordering PDU to the upper layers.

As mentioned above, if the reordering PDU is consecutive to the previously stored PDU segment, after delivering the concatenated MAC-ehs SDU, delivery of other complete MAC-ehs SDUs in the reordering PDU to the upper layers is not performed. In some situations, such as when more than one MAC-ehs SDU exists in the reordering PDU, a data error or delay may occur in the UE, since other complete MAC-ehs SDUs in the reordering PDU may be incorrectly discarded.

This in mind, the present invention aims at providing a method and apparatus for delivering protocol data units in a user equipment of a wireless communications system.

This is achieved by a method and apparatus for delivering protocol data units in a user equipment of a wireless communications system according to the pre-characterizing clauses of claims 1 and 8. The dependent claims pertain to corresponding further developments and improvements.

As will be seen more clearly from the detailed description following below, the claimed method for delivering protocol data units (PDUs) in a user equipment of a wireless communications system comprises steps of receiving a reordering PDU from a protocol entity, wherein the reordering PDU comprises a PDU sequence, a first PDU of the PDU sequence is a front-end segmented PDU, and a last PDU of the PDU sequence is a complete PDU; concatenating the first PDU with a previously stored PDU segment to form a complete PDU for delivering to a upper layer protocol entity of the protocol entity when the reordering PDU and the previously stored PDU segment are consecutive; and delivering all PDUs other than the first PDU in the reordering PDU to the upper layer protocol entity.

In the following, the invention is further illustrated by way of example, taking reference to the accompanying drawings. Thereof
FIG 1 illustrates a schematic diagram of a MAC-ehs PDU.
FIG.2 is a functional block diagram of a communications device.
FIG.3 is a schematic diagram of the program code in FIG.2.
FIG.4 is a schematic diagram of a process according to an embodiment of the present invention.

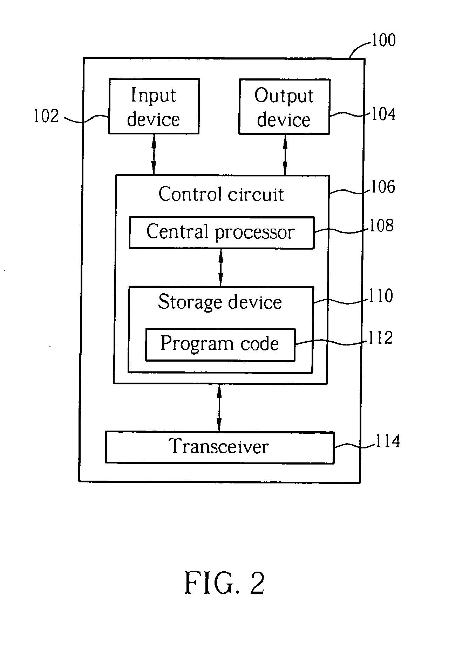

Please refer to FIG.2, which is a functional block diagram of a communications device 100. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

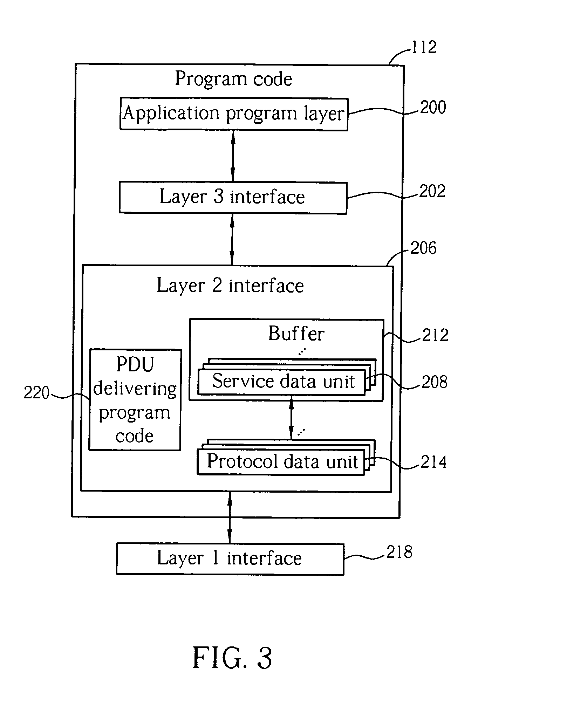

Please further refer to FIG.3, which is a schematic diagram of the program code 112 in FIG.2. The program code 112 comprises an application program layer 200, a layer 3 interface 202, a layer 2 interface 206, and a layer 1 interface 218. When transmitting signals, the layer 3 interface 202 submits Service Data Units (SDUs) 208 to the layer 2 interface 206 and the layer 2 interface 206 stores the SDUs 208 in a buffer 212. Then, the layer 2 interface 206 generates a plurality of PDUs 214 according to the SDUs 208 stored in the buffer 212 and outputs the PDUs 214 generated to a destination through the layer 1 interface 218. Conversely, when receiving a radio signal, the radio signal is received through the layer 1 interface 218 and the layer 1 interface 218 outputs PDUs 214 to the layer 2 interface 206. The layer interface 206 restores the PDUs 214 to SDUs 208 and stores the SDUs 208 in the buffer 212. At last, the layer 2 interface 206 transmits the SDUs 208 stored in the buffer 212 to the layer 3 interface 202. Preferably, the communications device 100 is applied in an Evolved High Speed Packet Access (Evolved HSPA) system, such that the layer 2 interface 206 can be a MAC-ehs interface utilized for handling MAC-ehs PDUs.

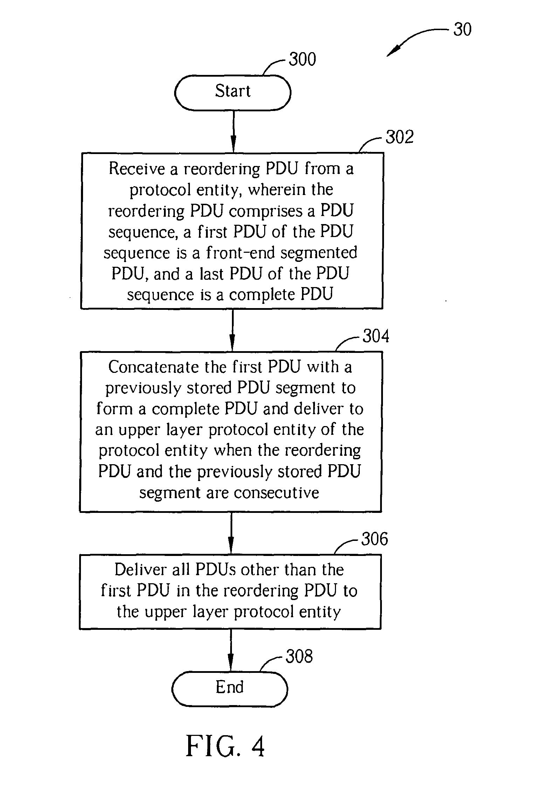

When a MAC-ehs PDU is received by the communications device 100, each reordering PDU in the MAC-ehs PDU is firstly assigned to a corresponding reordering queue for reordering and reassembly. In this case, the embodiment of the present invention provides a PDU delivering program code 220 in the program code 112 utilized for correctly delivering PDUs to upper layers. Please refer to FIG.4, which illustrates a schematic diagram of a process 30 according to an embodiment of the present invention. The process 30 is utilized for delivering PDUs in a user equipment of a wireless communications system, and can be compiled into the PDU delivering program code 220. The process 30 includes the following steps:
- Step 300:: Start.
- Step 302:: Receive a reordering PDU from a protocol entity, wherein the reordering PDU comprises a PDU sequence, a first PDU of the PDU sequence is a front-end segmented PDU, and a last PDU of the PDU sequence is a complete PDU.
- Step 304:: Concatenate the first PDU with a previously stored PDU segment to form a complete PDU and deliver to an upper layer protocol entity of the protocol entity when the reordering PDU and the previously stored PDU segment are consecutive.
- Step 306:: Deliver all PDUs other than the first PDU in the reordering PDU to the upper layer protocol entity.
- Step 308:: End.

According to the process 30, a reordering PDU is firstly received in a reordering queue. The reordering PDU is carried in a MAC-ehs PDU and includes a PDU sequence. The first PDU of the PDU sequence is a front-end segmented PDU, while a last PDU of the PDU sequence is a complete PDU. If the reordering PDU is determined consecutive to the previously stored PDU segment, the first PDU shall be concatenated with the previously stored PDU segment to form a complete PDU and delivered to an upper layer protocol entity of the protocol entity. Finally, all PDUs other than the first PDU in the reordering PDU are delivered to the upper layer protocol entity in the embodiment of the present invention.

In other words, when a first PDU of a received reordering PDU is a front-end segmented PDU and a last PDU of the received reordering PDU is a complete PDU, i.e. a Segmentation Indication (SI) header field corresponding to the reordering PDU is '01', if the reordering PDU is consecutive to the previously stored PDU segment, not only is the complete PDU being concatenated delivered to upper layers, such as to corresponding logic channels through a demultiplexing entity, but other complete PDUs in the reordering PDU are also delivered to the upper layers in the embodiment of the present invention. Therefore, concatenation and delivery of MAC-ehs PDUs can be executed correctly by the communications device 100, so as to avoid occurrence of a data error and delay.

In addition, even when there exists only one front-end segmented PDU in the reordering PDU, the reordering PDU can still be correctly reassembled with the previously stored PDU segment and delivered to upper layers through the process 30 of the present invention, which also belongs to the scope of the present invention. Certainly, the process 30 can further include steps of: determining whether the first PDU and the last PDU in the reordering PDU are segmented and segmentation types thereof according to the SI field corresponding to the reordering PDU; and determining whether the reordering PDU is consecutive to the previously stored PDU segment according to a Transmission Sequence Number (TSN) header field or the SI field corresponding to the reordering PDU, which are well-known by those skilled in the art, and are not narrated herein.

Therefore, for the reordering PDU received by the UE, if the first PDU is a front-end segmented PDU, the last PDU is a complete PDU, and the reordering PDU is consecutive to the previously stored PDU segment, the embodiment of the present invention further delivers all complete MAC-ehs SDUs in the reordering PDU to the upper layers after the concatenated PDU is delivered, so that occurrences of data error and delay can be avoided.

## Claims

1. A method for delivering protocol data units, named PDUs hereinafter, in a user equipment of a wireless communications system, the method comprising:
receiving a reordering PDU from a protocol entity, wherein the reordering PDU comprises a PDU sequence, a first PDU of the PDU sequence is a front-end segmented PDU, and a last PDU of the PDU sequence is a complete PDU (302);
concatenating the first PDU with a previously stored PDU segment to form a complete PDU for delivering to an upper layer protocol entity of the protocol entity when the reordering PDU and the previously stored PDU segment are consecutive (304); and
**characterized by** delivering all PDUs other than the first PDU in the reordering PDU to the upper layer protocol entity (306).

2. The method of claim 1, **characterized in that** the previously stored PDU segment is a back-end segmented PDU.

3. The method of claim 1, **characterized in that** the method further comprises:
determining whether the first PDU and the last PDU in the reordering PDU are segmented and segmentation types thereof according to a segmentation indication header field corresponding to the reordering PDU.

4. The method of claim 1, **characterized in that** the reordering PDU is carried in a MAC-ehs PDU.

5. The method of claim 1, **characterized in that** the method further comprises:
determining whether the reordering PDU is consecutive with the previously stored PDU segment according to a transmission sequence number header field or a segmentation indication header field corresponding to the reordering PDU.

6. The method of claim 1, **characterized in that** the PDU sequence comprises a plurality of consecutive PDUs, wherein the plurality of consecutive PDUs are MAC-ehs serving data units, named MAC-ehs SDUs, comprising MAC-d PDUs or MAC-c PDUs.

7. The method of claim 1, **characterized in that** the wireless communications system is an Evolved High Speed Packet Access system.

8. A communications device (100) used in a wireless communications system for delivering protocol data units, named PDUs hereinafter, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
receiving a reordering PDU from a protocol entity, wherein the reordering PDU comprises a PDU sequence, a first PDU of the PDU sequence is a front-end segmented PDU, and a last PDU of the PDU sequence is a complete PDU (302);
concatenating the first PDU with a previously stored PDU segment to form a complete PDU for delivering to an upper layer protocol entity of the protocol entity when the reordering PDU and the previously stored PDU segment are consecutive (304); and
**characterized by** delivering all PDUs other than the first PDU in the reordering PDU to the upper layer protocol entity (306).

9. The communications device (100) of claim 8, **characterized in that** the previously stored PDU segment is a back-end segmented PDU.

10. The communications device (100) of claim 8, **characterized in that** the program code (112) further comprises:
determining whether the first PDU and the last PDU in the reordering PDU are segmented and segmentation types thereof according to a segmentation indication header field corresponding to the reordering PDU.

11. The communications device (100) of claim 8, **characterized in that** the reordering PDU is carried in a MAC-ehs PDU.

12. The communications device (100) of claim 8, **characterized in that** the program code (112) further comprises:
determining whether the reordering PDU is consecutive with the previously stored PDU segment according to a transmission sequence number header field or a segmentation indication header field corresponding to the reordering PDU.

13. The communications device (100) of claim 8, **characterized in that** the PDU sequence comprises a plurality of consecutive PDUs, and the plurality of consecutive PDUs are MAC-ehs serving data units, named MAC-ehs SDUs, comprising MAC-d PDUs or MAC-c PDUs.

14. The communications device (100) of claim 8, **characterized in that** the wireless communications system is an Evolved High Speed Packet Access system.
